# EUROPÄISCHE PATENTSCHRIFT

(11) **EP 3 603 376 B1**
(45) Veröffentlichungstag und Bekanntmachung des Hinweises auf die Patenterteilung: **20.09.2023**
(21) Anmeldenummer: 19189301.5
(22) Anmeldetag: 31.07.2019
(51) Int. Cl.: A01D 41/14, A01B 73/00, A01D 75/00, B62D 37/04, A01B 63/11, B62D 49/06

(54) **ERNTEMASCHINE MIT EINEM ERNTEVORSATZ UND EINEM STÜTZRAD**
HARVESTING MACHINE WITH A HARVESTING ATTACHMENT AND A SUPPORT WHEEL
MACHINE DE RÉCOLTE DOTÉ D'UNE TÊTE DE RÉCOLTE ET D'UNE ROUE D'APPUI

(30) Priorität: 02.08.2018 DE 102018212931
(43) Veröffentlichungstag der Anmeldung: 05.02.2020
(73) Patentinhaber: Deere & Company, Moline, IL 61265 (US)
(72) Erfinder: Löbbing, Paul, 68163 Mannheim (DE)
(74) Vertreter: Holst, Sönke

(56) Entgegenhaltungen:
- EP-A1- 3 162 178
- DE-A1-102008 056 297
- GB-A- 773 685

## Beschreibung

Die Erfindung betrifft eine selbstfahrende Erntemaschine nach dem Oberbegriff des Anspruchs 1.

### Stand der Technik

An selbstfahrenden Erntemaschinen finden Erntevorsätze zum Abernten und Einbringen von Erntegut Verwendung. Aufgrund von Leistungssteigerungen der Erntemaschinen in jüngerer Zeit werden immer breitere Erntevorsätze verwendet, die eine relativ große Masse aufweisen. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maisgebisse für Feldhäcksler in der Regel klappbar ausgeführt. Es gibt jedoch auch klappbare Schneidwerke für Mähdrescher. Zum Straßentransport werden äußere Seitenteile der Erntevorsätze in eine Transportstellung verschwenkt, in der Regel nach oben oder innen. Sie bleiben beim Straßentransport an der Vorderseite der Erntemaschine befestigt. Dabei stellt sich die gesetzlich zulässige Gewichtsbelastung der Vorderräder der Erntemaschine bei den zunehmend breiter und schwerer werdenden Erntevorsätzen als problematisch dar.

In der DE 199 18 551 A1 und der DE 10 2010 002 506 A1 wird vorgeschlagen, ein zusätzliches Rad zur Abstützung des Erntevorsatzes bereitzustellen, das beim Straßentransport der Erntemaschine in Bodenkontakt gebracht werden kann. Dadurch erhält man eine zusätzliche Abstützung, die eine Einhaltung der gesetzlichen Vorschriften erleichtert oder ermöglicht. Das zusätzliche Rad ist an einem separaten Hilfsfahrwerk angebracht, der unter dem Erntevorsatz positionierbar und daran fixierbar ist. Das Hilfsfahrwerk verringert die Achslast der Vorderräder der Erntemaschine bei der Straßenfahrt und vergrößert in einem gewissen Maße auch die Achslast der Hinterräder gegenüber der Situation ohne Hilfsfahrwerk. Beim Erntebetrieb wird das Hilfsfahrwerk hingegen abgenommen und man erhält gegenüber der Straßenfahrt eine größere Achslast der Vorderräder, während die ' Achslast der Hinterräder vermindert wird. Das System aus der Last am Stützrad, Vorderachslast und Hinterachslast wird im Stand der Technik mit Hilfe von Heckballast derart beeinflusst, dass die gesetzlichen Vorgaben insbesondere hinsichtlich der Vorderachslast eingehalten werden können. Dabei sind oft alle diese Werte nah am zulässigen Maximalwert, so dass zusätzliches Ballastmaterial, um die Erntemaschine zum Ausgleich der nach Abbau des Stützrads verminderten Hinterachslast weiterhin unproblematisch lenken zu können, nicht mitgeführt werden kann. Zudem hätte das Mitführen von Ballastmaterial aus ökologischer Sicht keinen Sinn und sollte auf ein Minimum beschränkt werden.

Auch die DE 10 2008 056 297 A1 beschreibt ein Hilfsfahrwerk zur Anbringung unterhalb eines Erntevorsatzes. Die Stützlast des Hilfsfahrwerks wird beim Bremsen entlastet, indem ein Aktor zum Anheben des Erntevorsatzes aktiviert wird, um die auf die Vorderachse der Erntemaschine wirkende Last zu erhöhen und deren Bremsfähigkeit zu verbessern. Die GB 773 685 A beschreibt einen Erntevorsatz, dessen Gewicht in einer Schwimmbetriebsart durch ein Gegengewicht ausgeglichen wird.

Im Stand der Technik finden sich zwar bereits durch Aktoren verlagerbare Ballastgewichte, die beispielsweise anhand der Achsbelastung des Fahrzeugs selbsttätig verschoben werden (DE 199 28 471 A1) wie auch Mittel zur Veränderung der Achslast durch Verschieben eines Fahrwerks der Erntemaschine basierend auf der Gewichtskraft eines Emtevorsatzes oder einer erkannten Straßenfahrbetriebsart (EP 1 488 676 A1), jedoch relativ aufwändige Sensoren zur Erkennung der Achsbelastung oder der Gewichtskraft des Erntevorsatzes benötigen oder im Falle der Ansteuerung basierend auf der Straßenfahrbetriebsart anfällig gegen Fehlbedienungen sind.

Vorgeschlagen wurde auch eine Veränderung des Reifendrucks zur Anpassung an die Achslast mit dem Ziel, eine bestimmte Bodenbelastung nicht zu überschreiten (EP 1 493 599 A2, WO 2013/025884 A1), wie auch eine Erfassung des Reifendrucks mit dem Ziel der Erfassung der Ladungsverteilung eines Fahrzeugs (DE 10 2011 004 028 A1).

Die EP 3 162 178 A1 beschreibt einen Traktor oder eine Erntemaschine mit einem Gegengewicht, das mit einem Rad gekoppelt ist, welches während einer Straßenfahrt zur Verminderung der Achslast in Bodeneingriff gebracht und bei der Feldarbeit angehoben wird.

### Aufgabe

Die der Erfindung zu Grunde liegende Aufgabe wird darin gesehen, mit einfachen Mitteln eine angemessene Belastung der Hinterachse einer selbstfahrenden Erntemaschine mit einem durch ein Stützrad abstützbaren Erntevorsatz bei der Straßenfahrt und im Erntebetrieb zu ermöglichen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine selbstfahrende Erntemaschine, bei der es sich beispielsweise um einen Mähdrescher, einen Feldhäcksler oder einen Baumwollpflücker handeln kann, umfasst ein Fahrgestell, das durch vordere und hintere Räder auf dem Boden abgestützt wird. Anstelle der vorderen Räder oder der hinteren Räder oder beider können auch Raupenlaufwerke treten. Am Fahrgestell ist frontseitig ein Einzugsförderer vorgesehen, an dem ein Erntevorsatz in der Regel abnehmbar angebracht ist. In Vorwärtsrichtung vor den vorderen Rädern (bzw. Raupenlaufwerken) der Erntemaschine ist ein Stützrad angebracht, das in Bodeneingriff gebracht werden kann. Eine elektronische Steuereinrichtung ist mit einem Signal hinsichtlich des Bodeneingriffszustandes des Stützrads beaufschlagbar und eingerichtet, abhängig von dem Signal einen Aktor zur Verstellung der Position eines Ballastgewichts anzusteuern. Das Ballastgewicht beeinflusst die Last auf dem Stützrad, auf der vorderen Achse und der hinteren Achse und wird derart bewegt, dass in beiden Bodeneingriffszuständen des Stützrads (aktiv und inaktiv) eine sinnvolle Belastung der vorderen Räder oder Raupenlaufwerke, der hinteren Räder oder Raupenlaufwerke und ggf. des Stützrades vorliegt.

Mit anderen Worten ist ein Stützrad in Bodeneingriff bringbar oder nicht, indem es z.B. durch einen fremdkraftbetätigten Antrieb oder von Hand zwischen einem aktiven, den Erntevorsatz abstützenden Bodeneingriffszustand und einem inaktiven Bodeneingriffszustand, in dem es angehoben und vom Boden beabstandet oder vom Erntevorsatz oder der Erntemaschine bzw. deren Einzugsförderer abgenommen ist, bewegt werden kann. Eine geeignete Anordnung erfasst, ob sich das Stützrad im aktiven oder inaktiven Bodeneingriffszustand befindet und übersendet einer elektronischen Steuereinrichtung ein entsprechendes Signal. Die Steuereinrichtung kommandiert auf dem Signal basierend einen Aktor, der zur Verstellung der Position eines Ballastgewichts dient, dessen Position u.a. die Achslast der hinteren Räder oder Raupenlaufwerke beeinflusst. Auf diese Weise wird mit einfachen Mitteln selbsttätig erkannt, ob eine Abstützung des Erntevorsatzes oder des vorderen Bereichs der Erntemaschine durch das Stützrad stattfindet oder nicht und darauf basierend ein Ballastgewicht verstellt, sodass sowohl bei aktivem als auch bei inaktivem Stützrad eine angemessene Belastung der hinteren Räder oder Raupenlaufwerke erfolgen kann, was in beiden erwähnten Betriebsarten die Lenkfähigkeit der Erntemaschine ohne An- und Abbauen zusätzlicher Ballastgewichte sicherstellt. Analoges gilt für die vorderen Räder oder Raupenlaufwerke, denn sie werden im Erntebetrieb entlastet, während das Stützrad beim Straßentransport einen Teil der Last der Vorderräder oder Raupenlaufwerke aufnimmt.

Das Stützrad ist am Erntevorsatz und/oder am Einzugsförderer und/oder an der Erntemaschine selbst, beispielsweise an deren Vorderachse befestigt. Wird es am Erntevorsatz befestigt, ist es vorzugsweise an einem Hilfsfahrwerk angebracht, welches vor einer Straßenfahrt am Erntevorsatz befestigt und vor Beginn des Erntebetriebs wieder abgenommen wird. Es wäre aber auch denkbar, das Stützrad permanent am Erntevorsatz oder am Einzugsförderer und/oder an der Erntemaschine zu befestigen und bei Nichtbenutzung von Hand oder durch einen fremdkraftbetätigten Antrieb anzuheben, wie oben erwähnt.

Ist das Stützrad an einem Hilfsfahrwerk angebracht, kann das Signal hinsichtlich des Bodeneingriffszustandes des Stützrads durch eine Anordnung zur Erkennung des Anbringungszustands des Hilfsfahrwerks bereitstellbar sein. Eine derartige Anordnung kann beispielsweise einen Sensor (z.B. Schalter) am Erntevorsatz umfassen, der mit dem Hilfsfahrwerk zusammenwirkt. Eine andere Möglichkeit besteht darin, eine sich beim Anbau des Hilfsfahrwerks selbsttätig schließende Steckverbindung zwischen Erntevorsatz und Hilfsfahrwerk mit einem Kontakt zu versehen, der sich bei angebautem Hilfsfahrwerk schließt. Dieser Kontakt (oder der Sensor) kann auch dazu dienen, einen Aktor zur Höhensteuerung des Emtevorsatzes anzusteuern, um den Bodendruck des Erntevorsatzes an das angebrachte Hilfsfahrwerk anzupassen.

Die Steuereinrichtung ist programmiert, den Aktor anzuweisen, das Ballastgewicht bei im Bodeneingriff befindlichem Stützrad in eine erste Stellung zu verbringen und das Ballastgewicht bei nicht im Bodeneingriff befindlichem Stützrad in eine zweite Stellung zu verbringen, wobei das Ballastgewicht in der ersten Stellung weniger Last auf die hinteren Räder oder Raupenlaufwerke bringt als in der zweiten Stellung, in welcher es weiter hinten als in der ersten Stellung angeordnet ist. Dazu ist das Ballastgewicht zwischen der ersten Stellung und der zweiten Stellung entlang der Vorwärtsrichtung der Erntemaschine verschiebbar und/oder um ein quer zur Vorwärtsrichtung verlaufende Achse schwenkbar.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer Erntemaschine mit einem daran angebrachten, durch ein Stützrad abgestützten Erntevorsatz und einem in einer ersten Stellung befindlichen Ballastgewicht, und
- Fig. 2: die Erntemaschine der Figur 1 mit abgebautem Stützrad und mit dem in eine zweite Stellung verbrachten Ballastgewicht.

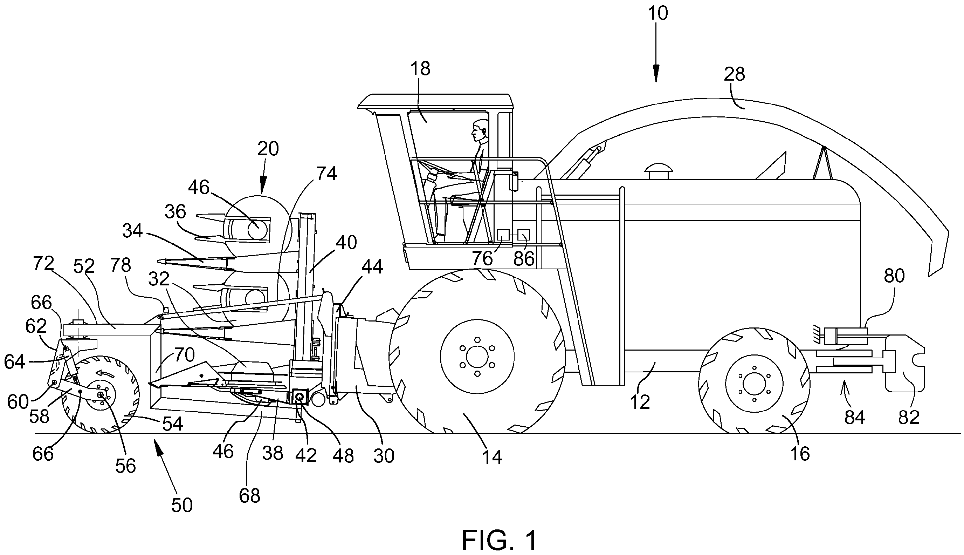

Eine in der Figur 1 gezeigte selbstfahrende landwirtschaftliche Erntemaschine 10 in der Art eines Feldhäckslers baut sich auf einem Fahrgestell 12 auf, das von vorderen und hinteren Rädern 14 und 16 getragen wird. Die vorderen Räder 14 dienen als Hauptantriebsräder, während die hinteren Räder 16 lenkbar sind. Die Bedienung der Erntemaschine 10 erfolgt von einer Fahrerkabine 18 aus, von der aus ein Erntevorsatz 20 einsehbar ist. Mittels eines Erntevorsatzes 20 vom Boden aufgenommenes Gut, z. B. Mais, Sonnenblumen oder Sorghum, wird im Erntebetrieb über einen Einzugsförderer 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen um die Hochachse drehbaren und höhenverstellbaren Auswurfkrümmer 28, der mit einer verstellbaren Auswurfklappe ausgestattet ist. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen, wie Schneidwerken oder Maispflückern, Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

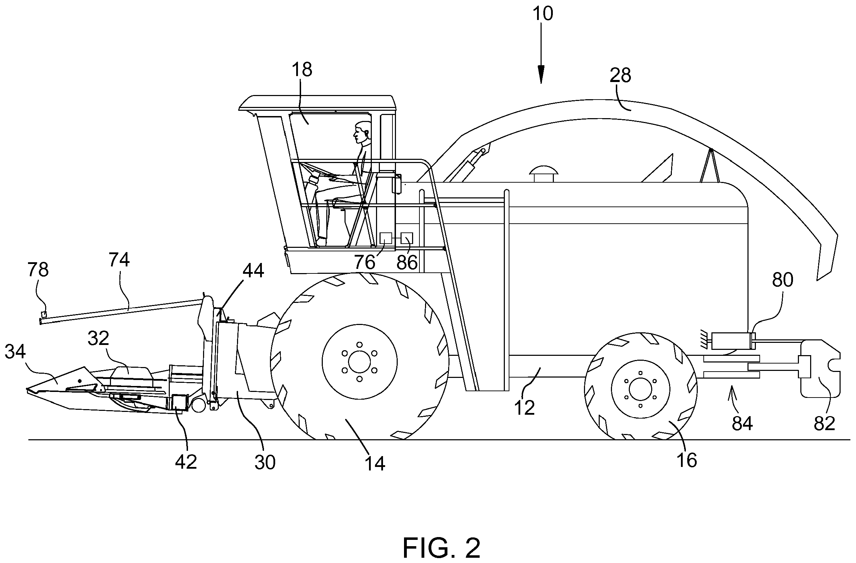

Zum Aufnehmen des Ernteguts dient der Erntevorsatz 20, der in Vorwärtsrichtung an der Frontseite der Erntemaschine 10 am Gehäuse des Einzugsförderers 30 befestigt ist. Der Erntevorsatz 20 ist in der dargestellten Ausführungsform ein an sich bekanntes Maisgebiss, das einen Mittelteil 38 und zwei (bezüglich der Vorwärtsrichtung der Erntemaschine 10) seitlich links und rechts neben dem Mittelteil 38 angeordneten Seitenteile 40 umfasst. Die Seitenteile 40 sind zum Straßentransport nach oben schwenkbar am Mittelteil 38 befestigt und können zum Ernteeinsatz durch Hydraulikzylinder (nicht gezeigt) hydraulisch heruntergeschwenkt werden, so dass sie beim Erntebetrieb parallel zum Mittelteil 38 verlaufen. Anschließend können sie wieder hinauf geschwenkt werden. Die Figur 1 zeigt die Seitenteile 40 in hochgeschwenktem Zustand und die Figur 2 in abgesenktem Zustand für den Erntebetrieb. Als Einzugseinrichtungen zum Einziehen von Pflanzen sind am Mittelteil 38 in der vorliegenden Ausführungsform vier Einzugs- und Mähtrommeln 32 angebracht, während an beiden Seitenteilen 40 jeweils zwei Einzugs- und Mähtrommeln 32 angebracht sind. Selbstverständlich können beliebige andere Anzahlen und Abmessungen von Einzugs- und Mähtrommeln 32 verwendet werden. Der Erntevorsatz 20 ist in an sich bekannter Weise mit Halmteilern 36, den Einzugs- und Mähtrommeln 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie dem Einzugsförderer 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20 und umfasst drei Segmente, von denen jeweils eines dem Mittelteil 38 und eines jedem Seitenteil 40 zugeordnet ist. An der Vorderseite des unteren Querträgers 42 sind Getriebegehäuse 46 angeschraubt, die zum Antrieb jeweils einer Einzugs- und Mähtrommel 32 dienen. Eine Antriebswelle 48 zum Antrieb der Einzugs- und Mähtrommeln 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen unteren Querträgers 42. Der obere Querträger 44 erstreckt sich in seitlicher Richtung oberhalb des Einlasses des Einzugsförderers 30 über dessen Breite. An der Oberseite des Einzugsförderers 30 sind hakenförmige Tragelemente vorgesehen, die den oberen Querträger 44 von vorn und hinten untergreifen und zur Befestigung des Erntevorsatzes 20 an der Erntemaschine 10 dienen.

In der Figuren 1 ist der Erntevorsatz 20 mit einem Hilfsfahrwerk 50 zur Abstützung des Erntevorsatzes 20 bei der Straßenfahrt gekoppelt. Das Hilfsfahrwerk 50 umfasst ein Gestell 52 und ein Stützrad 54, das um eine Drehachse 56 drehbar an einer Halterung 58 gelagert ist. Die Halterung 58 ist um eine horizontale, parallel zur Drehachse 56 orientierte Schwenkachse 60 schwenkbar an einem Stützelement 62 angebracht, das seinerseits um eine etwa vertikale Achse frei drehbar am Gestell 52 angelenkt ist. Zwischen dem Stützelement 62 und der Halterung 58 erstreckt sich ein Hydraulikzylinder 64, der an beiden Befestigungspunkten 66 um sich parallel zur Drehachse 56 und Schwenkachse 60 erstreckende Achsen schwenkbar angelenkt ist und zur Vorgabe der Position des Stützrads 54 gegenüber dem Hilfsfahrwerk 50 dient. Das Stützrad 54 könnte auch an beliebiger anderer Stelle des Hilfsfahrwerks 50 montiert sein, beispielsweise unterhalb des Erntevorsatzes 20.

Das Gestell 52 umfasst einen unteren Teil 68, dessen rückwärtiges Ende am unteren Querträger 42 verriegelbar ist, einen sich an der Vorderseite des unteren Teils 68 etwa vertikal nach oben erstreckenden, vertikalen Teil 70 und einen vorderen, etwa horizontalen Teil, der sich vom oberen Ende des vertikalen Teils 70 nach vorn erstreckt und an dem das Stützelement 62 angelenkt ist. Eine am Querträger 44 befestigte Strebe 74 verbindet das obere Ende des vertikalen Teils 70 mit dem oberen Querträger 44. Das Stützrad 54 ist somit durch das Stützelement 62 nachlaufgelenkt am Gestell 52 befestigt und nimmt einen Teil der Last des Erntevorsatzes 20 (oder dessen gesamte Last und ggf. einen Teil der Last der Erntemaschine 10) auf.

In der Figur 1 sind die Erntemaschine 10, der Erntevorsatz 20 und das Hilfsfahrwerk 50 in einer Straßenfahrtposition dargestellt. Vor Beginn des Erntebetriebs kann das Hilfsfahrwerk 50 vom Erntevorsatz getrennt werden, indem die Verriegelungen zwischen dem unteren Teil 68 und dem unteren Querträger 42 und zwischen der Strebe 74 und dem oberen Querträger 44 gelöst werden. Anschließend können die Seitenteile 40 des Erntevorsatzes 20 nach unten verschwenkt werden. Diese Situation ist in der Figur 2 gezeigt. Vor einer weiteren Straßenfahrt werden die Seitenteile 40 wieder hochgeschwenkt und das Hilfsfahrwerk 50 an den Querträgern 42, 44 verriegelt. Eine detaillierte Beschreibung einer möglichen Ausführungsform des Hilfsfahrwerks findet sich in der DE 10 2004 059 038 A1 und DE 10 2007 035 744 A1, deren Offenbarungen durch Verweis mit in die vorliegenden Unterlagen aufgenommen werden.

Das Stützrad 54 bewirkt im angebrachten Zustand des Hilfsfahrwerks 50 eine Entlastung der vorderen Räder 14 der Erntemaschine 10, was die Einhaltung der gesetzlichen Regelungen zur Achslast der vorderen Räder 14 erleichtert. Gleichzeitig werden die hinteren Räder 16 bei abgebautem Hilfsfahrwerk 50 (Figur 2) gegenüber der Situation bei angebrachtem Hilfsfahrwerk entlastet, was dazu führt, dass bei ungünstigen Betriebsbedingungen (z.B. Bremsen) ein Lenken nur schwierig möglich ist. Im Stand der Technik ist daher die Hinterachse durch an der Rückseite der Erntemaschine 10 während des Betriebs unbeweglich angebrachte Ballastgewichte zu beschweren. Dieses beim Erntebetrieb benötigte Ballastgewicht beeinflusst auch bei der Straßenfahrt die Verteilung der Last auf Stützrad 54, vordere Räder 14 und hintere Räder 16. Da bei der Straßenfahrt, bedingt durch die immer breiteren Vorsatzgeräte, die gesetzlich zulässigen Werte meist ausgeschöpft sind, ist es häufig nicht möglich, noch zusätzlichen Ballast mitzuführen, um so auch beim Erntebetrieb lenkbar zu bleiben.

Zur Vermeidung dieses Problems ist bei der vorliegenden Ausführungsform eine elektronische Steuereinrichtung 76 signalübertragend mit einer Anordnung 78 zur Erkennung des Anbringungszustands des Hilfsfahrwerks 50 verbunden. Diese Anordnung 78 ist an der Vorderseite der Strebe 74 angebracht und umfasst einen Sensor, der z.B. mechanisch, kapazitiv oder induktiv mit dem benachbarten Teil des Gestells des Hilfsfahrwerks 50 zusammenwirkt. Es besteht auch die Möglichkeit, die Anordnung in eine elektrische Verbindung zwischen dem Erntevorsatz 10 und dem Hilfsfahrwerk 50 zu integrieren, die sich bei Anbringen des Hilfsfahrwerks 50 selbsttätig schließt und zur Übertragung von elektrischem Strom auf Beleuchtungs- und/oder Fahrtrichtungsanzeiger des Hilfsfahrwerks 50 dient (vgl. DE 10 2014 209 218 A1). Ein Kontakt der elektrischen Verbindung kann beispielsweise durch das Hilfsfahrwerk 50 geerdet werden, sodass die Anordnung 78 anhand dieser Verbindung das angebrachte Hilfsfahrwerk 50 erkennt.

Die elektronische Steuereinrichtung 76 ist zudem signalübertragend mit einer Ventileinrichtung 86 verbunden, welche zur Ansteuerung eines Aktors 80 dient, der als Hydraulikzylinder ausgeführt sein kann und zur Verschiebung eines in einer Lagerung 84 in Vorwärtsrichtung der Erntemaschine 10 verschiebbaren Ballastgewichts 84 dient. Bei angebrachtem Hilfsfahrwerk 50 verschiebt der Aktor 80 das Ballastgewicht 82 nach in der Fahrtrichtung nach vorn, um die Hinterachse der Erntemaschine 10 zu entlasten (Figur 1) und bei abgebautem Hilfsfahrwerk 50 verschiebt der Aktor 80 das Ballastgewicht 82 entgegen der Fahrtrichtung nach hinten, um die Hinterachse der Erntemaschine 10 zu belasten (Figur 2). Auf diese Weise wird mit einfachen Mitteln erreicht, dass die hinteren Räder 16 in beiden Bodeneingriffszuständen des Stützrads 54 mit geeigneter Last beaufschlagt werden, um in den üblichen Betriebssituationen eine Lenkbewegung zu ermöglichen.

In einer nicht gezeigten Abwandlung könnte der Aktor 80 das Ballastgewicht 82 um die Querachse verschwenken, wie in der DE 10 2008 043 698 A1, deren Offenbarung durch Verweis mit in die vorliegenden Unterlagen aufgenommen wird, beschrieben wird.

Es wäre auch denkbar, zur Verfeinerung der beschriebenen Positionssteuerung des Ballastgewichts 82 anhand des Bodeneingriffszustands des Stützrades 54 (oder alternativ dazu) die Stützlasten der vorderen Räder 14 und rückwärtigen Räder 16 mit Hilfe von Sensoren zu messen und über diese Messwerte die Ballastverlagerung zu steuern. Es wäre auch denkbar, die Ballastposition anhand des Luftdrucks in den Reifen zu steuern, d.h. mit Hilfe der Reifengröße und/oder -breite und des gemessenen Luftdruckes im Reifen ermittelt man den Bodendruck und steuert bei einer erfassten Änderung des Luftdruckes die Position des Ballastgewichts 82 nach. Natürlich wäre es auch möglich, die Ballastposition ohne irgendwelche Abfragen und Sensoren von Hand mittels einer Bedienerschnittstelle zu steuern. Die Ansteuerung des Aktors 80 kann in allen erwähnten Beispielsfällen mit dem Ziel erfolgen, einen vorgegebenen bzw. zulässigen Bodendruck einzuhalten, wie es derzeit als mögliche Änderung der gesetzlichen Vorgaben, die sich derzeit noch auf die Achslast beziehen, diskutiert wird.

Das verstellbare Ballastgewicht 82 ermöglicht es, die gesetzlichen Vorgaben leichter einzuhalten, als es mit einem unverstellbar angebrachten Ballastgewicht 82 möglich wäre. Durch eine Verlagerung des Ballastgewichtes 82 wird allein durch dessen Position die Lastverteilung auf die vorderen und hinteren Räder 14, 16 positiv beeinflusst, ohne das Gesamtgewicht der Erntemaschine 10 nennenswert zu erhöhen. Durch die beschriebene Steuerung der Achslasten durch Sensoren oder ähnliche Bauteile geht man von statischen Lastverteilungen zu einer Lastverteilung über, die sich selbsttätig den Gegebenheiten anpasst.

## Patentansprüche

1. Selbstfahrende Erntemaschine (10) mit einem durch vordere und hintere Räder (14, 16) und/oder Raupenlaufwerke auf dem Boden abgestützten Fahrgestell (12), einem Einzugsförderer (30), an dem ein Erntevorsatz (20) angebracht ist, und wenigstens einem den vorderen Rädern (14) oder Raupenlaufwerken vorgelagert anbringbaren, in Bodeneingriff verbringbaren Stützrad (54), das am Erntevorsatz (20) und/oder am Einzugsförderer (30) der Erntemaschine (10) und/oder an der Erntemaschine (10) befestigt ist und zwischen einem aktiven, den Erntevorsatz (20) abstützenden Bodeneingriffszustand und einem inaktiven Bodeneingriffszustand, in dem es angehoben und vom Boden beabstandet oder vom Erntevorsatz (20) oder der Erntemaschine (10) oder deren Einzugsförderer (30) abgenommen ist, bewegt werden kann, **dadurch gekennzeichnet, dass** eine elektronische Steuereinrichtung (76) durch eine Anordnung, die konfiguriert ist, zu erfassen, ob sich das Stützrad im aktiven oder inaktiven Bodeneingriffszustand befindet, mit einem Signal hinsichtlich des Bodeneingriffszustandes des Stützrads (54) beaufschlagbar und eingerichtet ist, abhängig von dem Signal einen Aktor (80) zur Verstellung der Position eines der Erntemaschine (10) zugeordneten Ballastgewichts (82) anzusteuern, wobei die Steuereinrichtung (76) programmiert ist, den Aktor (80) anzuweisen, das Ballastgewicht (82) bei im Bodeneingriff befindlichem Stützrad (54) in eine erste Stellung zu verbringen und das Ballastgewicht (82) bei nicht im Bodeneingriff befindlichem Stützrad (54) in eine zweite Stellung zu verbringen, wobei das Ballastgewicht (82) in der ersten Stellung weniger Last auf die hinteren Räder (16) oder Raupenlaufwerke bringt als in der zweiten Stellung, in welcher es weiter hinten als in der ersten Stellung angeordnet ist, wobei das Ballastgewicht zwischen der ersten Stellung und der zweiten Stellung entlang der Vorwärtsrichtung der Erntemaschine (10) verschiebbar und/oder um eine quer zur Vorwärtsrichtung verlaufende Achse schwenkbar ist.

2. Erntemaschine (10) nach Anspruch 1, wobei das Stützrad (54) an einem Hilfsfahrwerk (50) befestigt ist, das bei einer Straßenfahrt am Erntevorsatz (20) befestigbar und beim Erntebetrieb davon abnehmbar ist.

3. Erntemaschine (10) nach Anspruch 2, wobei das Signal hinsichtlich des Bodeneingriffszustandes des Stützrads (54) durch eine Anordnung (78) zur Erkennung des Anbringungszustands des Hilfsfahrwerks (50) am Erntevorsatz (20) bereitstellbar ist.

## Claims

1. Self-propelled harvester (10) having a chassis (12) supported on the ground by front and rear wheels (14, 16) and/or caterpillar drives, an intake conveyor (30) to which a harvesting header (20) is attached, and at least one support wheel (54) which can be attached upstream of the front wheels (14) or caterpillar drives, can be brought into ground engagement, is fastened to the harvesting header (20) and/or to the intake conveyor (30) of the harvester (10) and/or to the harvester (10) and can be moved between an active ground engagement state supporting the harvesting header (20) and an inactive ground engagement state, in which it is raised and spaced apart from the ground or removed from the harvesting header (20) or the harvester (10) or the intake conveyor (30) thereof, **characterized in that** an electronic control device (76) can be acted upon with a signal in respect of the ground engagement state of the support wheel (54) by an arrangement which is configured to detect whether the support wheel is in the active or inactive ground engagement state, and is designed, depending on the signal, to activate an actuator (80) for adjusting the position of a ballast weight (82) assigned to the harvester (10), wherein the control device (76) is programmed to instruct the actuator (80) to bring the ballast weight (82) into a first position, when the support wheel (54) is in ground engagement, and to bring the ballast weight (82) into a second position, when the support wheel (54) is not in ground engagement, wherein the ballast weight (82) applies less load to the rear wheels (16) or caterpillar drives in the first position than in the second position in which it is arranged further to the rear than in the first position, wherein the ballast weight is displaceable between the first position and the second position along the forwards direction of the harvester (10) and/or is pivotable about an axis running transversely with respect to the forwards direction.

2. Harvester (10) according to Claim 1, wherein the support wheel (54) is fastened to auxiliary running gear (50) which is fastenable to the harvesting header (20) for road travel and is removable therefrom for the harvesting mode.

3. Harvester (10) according to Claim 2, wherein the signal in respect of the ground engagement state of the support wheel (54) can be provided by an arrangement (78) for identifying the attachment state of the auxiliary running gear (50) to the harvesting header (20).

## Revendications

1. Machine de récolte automotrice (10) comprenant un châssis (12) en appui sur le sol par le biais de roues (14, 16) et/ou mécanismes de roulement à chenilles avant et arrière, un convoyeur d'alimentation (30) sur lequel est monté un équipement de récolte frontal (20), et au moins une roue d'appui (54) qui peut être montée devant les roues (14) ou mécanismes de roulement à chenilles avant, qui peut être amenée en contact avec le sol et qui est fixée à l'équipement de récolte frontal (20) et/ou au convoyeur d'alimentation (30) de la machine de récolte (10) et/ou à la machine de récolte (10) et peut être déplacée entre un état actif d'engagement avec le sol supportant l'équipement de récolte frontal (20) et un état inactif d'engagement avec le sol dans lequel elle est surélevée et espacée du sol ou détachée de l'équipement de récolte frontal (20) ou de la machine de récolte (10) ou de son convoyeur d'alimentation (30), **caractérisée en ce qu'**un dispositif de commande électronique (76) peut être soumis à un signal relatif à l'état d'engagement avec le sol de la roue de support (54) par le biais d'un ensemble qui est configuré pour détecter si la roue de support est dans l'état actif ou inactif d'engagement au sol et est conçu pour commander en fonction du signal un actionneur (80) destiné à régler la position d'un lest (82) associé à la machine de récolte (10), le dispositif de commande (76) étant programmé pour ordonner à l'actionneur (80) de déplacer le lest (82) dans une première position lorsque la roue de support (54) est en engagement avec le sol et de déplacer le lest (82) dans une deuxième position lorsque la roue de support (54) n'est pas en engagement avec le sol, le lest (82) exerçant dans la première position moins de charge sur les roues (16) ou mécanismes de roulement à chenilles arrière que dans la deuxième position dans laquelle il est situé plus en arrière que dans la première position, le lest pouvant coulisser entre la première position et la deuxième position suivant la direction vers l'avant de la machine de récolte (10) et/ou pouvant pivoter sur un axe qui s'étend transversalement à la direction vers l'avant.

2. Machine de récolte (10) selon la revendication 1, la roue de support (54) étant fixée à un mécanisme de roulement auxiliaire (50) qui peut être fixé à l'équipement de récolte frontal (20) lors de la conduite sur route et qui peut en être retiré lors d'opérations de récolte.

3. Machine de récolte (10) selon la revendication 2, le signal relatif à l'état d'engagement avec le sol de la roue de support (54) pouvant être fourni par un ensemble (78) destiné à détecter l'état de fixation du mécanisme de roulement auxiliaire (50) sur l'équipement de récolte frontal (20).
